# EUROPEAN PATENT SPECIFICATION

(11) **EP 2 363 907 B1**
(45) Date of publication and mention of the grant of the patent: **19.07.2017**
(21) Application number: 10196582.0
(22) Date of filing: 22.12.2010
(51) Int. Cl.: H01M 2/26

(54) **Electrode assembly and secondary battery using the same**
Elektrodenanordnung und Sekundärbatterie damit
Ensemble d'électrode et batterie secondaire l'utilisant

(30) Priority: 19.02.2010 US 306396 P; 09.12.2010 US 964721
(43) Date of publication of application: 07.09.2011
(73) Proprietor: Samsung SDI Co., Ltd., Yongin-si, Gyeonggi-do 17084 (KR)
(72) Inventor: Yoo, Kyung-Mo, Gyeonggi-do (KR)
(74) Representative: Walaski, Jan Filip

(56) References cited:
- EP-A1- 2 239 802
- EP-A2- 1 369 939
- US-A1- 2002 146 620
- US-A1- 2008 028 598

## Description

The present invention relates to an electrode assembly and a secondary battery using the same.

Recently, as portable electronic apparatuses have been miniaturized and made lighter, considerable research is being carried out into secondary batteries as a driving power source. In particular, for portable wireless apparatus products including a cellular phone, a notebook computer, a personal digital assistant, etc., which are becoming lighter while increasing in functionality, the importance of the battery as a driving power source is being remarkably emphasized.

Since the secondary battery can repeatedly be used through repetition of charging and discharging, the secondary battery is more economical than a primary battery. Further, since the miniaturization and high-capacity of the secondary battery can be implemented, the secondary battery has high operating voltage and high energy density per unit weight, and is widely used in high-tech electronic apparatus fields.

In particular, the use of lithium secondary batteries is increasing, as these have an operating voltage (at about 3.7V) that is about three times higher than a nickelcadmium battery or a nickel-hydride battery and a higher energy density per unit weight.

In general, there is demand for a secondary battery such as a can-type battery and a pouch-type battery which is thin and can be applied to the cellular phone and for a secondary battery such as a lithium polymer battery having excellent energy density, discharge voltage, and stability.

As such, an electrode assembly housed in a can-type or pouch-type exterior material includes an anode plate and a cathode plate sequentially laminated or wound with separators being interposed therebetween. In the laminate-type electrode assembly, electrode tabs are extended and fused from the anode plate and the cathode plate to be electrically connected with anode and cathode electrode leads, respectively. In addition, a part of the electrode lead is exposed outside the can or pouch-type exterior material and electrically connected with a protection circuit module in a subsequent process.

However, since the electrode tabs which are extended from the anode plate and the cathode plate extend in a line to be electrically connected with the electrode lead, the electrode tabs occupy a large space in the exterior material, thereby deteriorating the utilization of the inner space of the exterior material.

The present invention aims to address the above problems, providing the electrode assembly according to claim land the battery according to claim 11. US2002/146620, US2008/028598, EP1369939 and EP2239802 disclose secondary batteries where the electrode tabs are folded in order to minimise the space utilised in joining leads and tabs within the battery package.

According to an aspect of the invention, there is provided an electrode assembly comprising a plurality of first and second electrode plates having separators in between, each of the first and second electrode plates having a tab extending therefrom, wherein the tabs of at least one of the first electrode plates or the second electrode plates are wound together to form a wound portion having a plurality of windings, the electrode assembly further comprising an electrode lead connected to an outside surface of the wound portion.

The electrode lead may be connected on a side of the wound portion where the plurality of tabs converge or on a side of the wound portion opposite to the side where the plurality of tabs converge.

The electrode lead may be wound with the plurality of tabs into the wound portion. The electrode assembly may further comprise a bent portion before the wound portion, wherein the plurality of tabs are bent back on themselves to form the bent portion. The electrode lead is connected between the bent portion and the wound portion.

The electrode lead may be attached to an outermost tab extending from an outermost electrode plate, and the outermost tab may be bent such that the height of the wound portion with the electrode lead attached does not extend beyond the outermost electrode plate.

A length of the extended portion of each successive tab may be shorter than that of the preceding tab.

The tabs may be wound together such that a first tab on the outermost side is longer than a second tab on an inner side.

A secondary battery according to the invention may comprise a housing and an electrode assembly as set out above in the housing, the electrode assembly including first and second electrode leads extending out of the housing, wherein the wound portion is contained wholly within the housing.

An insulating material may be wound around the electrode leads where the electrode leads emerge from the housing.

The accompanying drawings, together with the specification, illustrate exemplary embodiments of the present invention, and, together with the description, serve to explain the principles of the present invention.
FIG. 1 is an exploded perspective view of a secondary battery according to a first embodiment of the present invention.
FIG. 2 is a perspective view of a secondary battery according to a first embodiment of the present invention.
FIG. 3 is a cross-sectional view taken along line A-A' of FIG. 2.
FIG. 4 is a perspective view of an electrode assembly according to a second embodiment of the present invention.
FIG. 5 is a cross-sectional view showing a wound electrode tab and a lead which are bonded to each other according to a third embodiment of the present invention.
FIG. 6 is a cross-sectional view showing a bent electrode tab and a lead which are bonded to each other.
FIG. 7 is a cross-sectional view showing a bent electrode tab and a lead which are bonded to each other.
FIG. 8 is a cross-sectional view showing a bent and wound electrode tab and a lead which are bonded to each other according to a fourth embodiment of the present invention.
FIG. 9 is a cross-sectional view showing a bent and wound electrode tab and a lead which are bonded to each other according to a fifth embodiment of the present invention.
FIG. 10A is a cross-sectional view showing an electrode tab and a lead which are wound together according to a sixth embodiment of the present invention.
FIG. 10B is a cross-sectional view showing a lead which is bent in a direction opposite to an electrode assembly according to the sixth embodiment of the present invention.

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

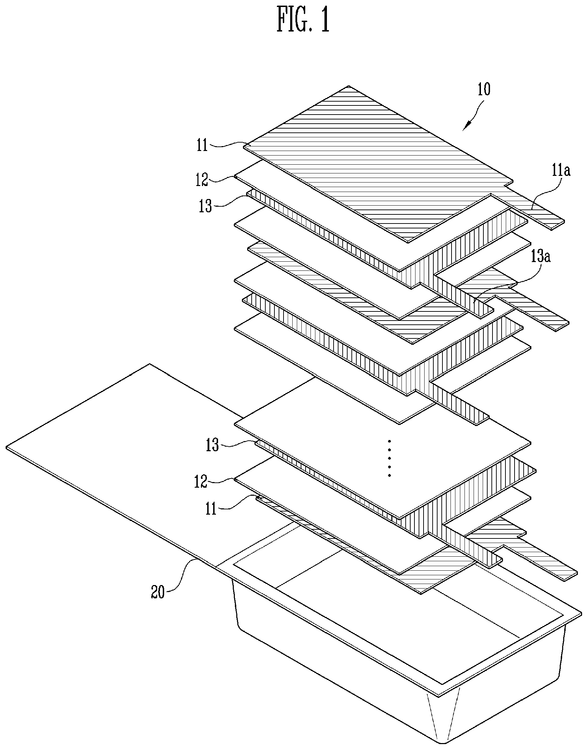

FIG. 1 is an exploded perspective view of a secondary battery according to a first embodiment of the present invention.

Referring to FIG. 1, in an electrode assembly 10, an anode plate 11 and a cathode plate 13 which are applied with an active material are alternately disposed and laminated with a separator 12 interposed therebetween. Anode tabs 11a which extend from one side are formed on the anode plate 11 and cathode tabs 13a which extend from the other side in the same direction as the anode tabs 11a are formed on the cathode plate 13.

Although a laminate-type electrode assembly is shown in the first embodiment of the present invention, another electrode assembly having a structure in which a plurality of electrode tabs are overlapped with each other may, of course, be formed.

The anode plate 11 and the cathode plate 13 are generally formed by applying and filling the active material to and into a metallic material, and drying, roll-pressing, and cutting it although they may differently be formed depending on the type of the secondary battery. The anode plate 11 and the cathode plate 13 are fabricated by coating an aluminum metal foil and a copper metal foil with slurries, respectively and drying them. At this time, the slurries include the active materials of the anode plate 11 and the cathode plate 13 and a fixing agent which allows the active materials to adhere to the metal foils. In the case of a lithium secondary battery, an oxide containing lithium is primarily used as an anode active material and any one of hard carbon, soft carbon, graphite, and a carbon substance may primarily be used as a cathode active material, but the present invention is not limited to the lithium secondary battery.

The separator 12 is interposed between the anode plate 11 and the cathode plate 13. An insulating thin film having high ion permeability and high mechanical strength is used. Diameters of pores of the separator 12 are generally in the range of 0.01 to 10 µm and thicknesses thereof are generally in the range of 5 to 300 µm. A sheet or a non-woven fabric made of an olefinic polymer such as chemical-resistant and hydrophobic polypropylene, a glass fiber, or polyethylene may be used as the separator 12, for example. At this time, in the case in which a solid electrolyte such as a polymer, etc. is used as an electrolyte, the solid electrolyte may also serve as the separator 12.

In addition, a pouch case 20 has a receiving space which can house the electrode assembly 10. The pouch case 20 is generally formed on the top and bottom of an aluminum thin-film to have a laminate structure. An inner surface of the pouch case 20 is made of a heat adhesive resin.

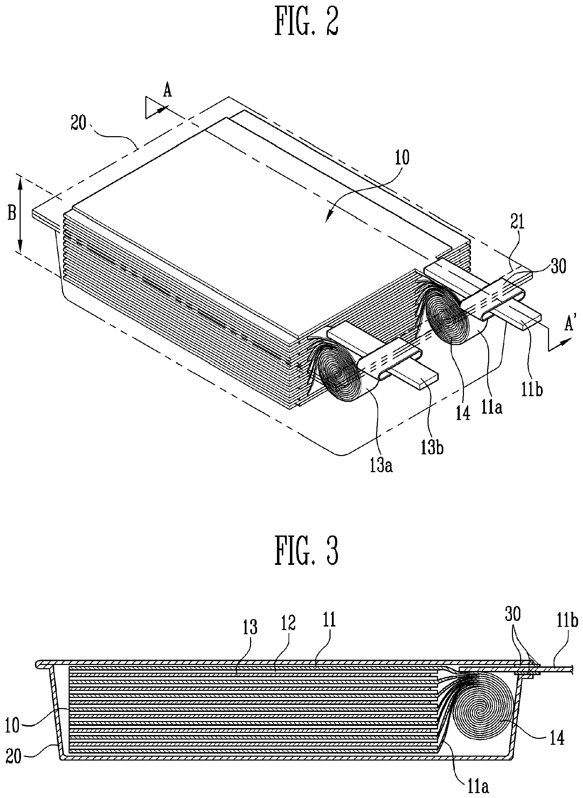

FIG. 2 is a perspective view of a secondary battery according to a first embodiment of the present invention and FIG. 3 is a cross-sectional view taken along line A-A' of FIG. 2.

Referring to FIGS. 2 and 3, when the electrode assembly 10 is received in the receiving space of the pouch case 20, a part of each of an anode lead 11b bonded to the anode tab 11a and a cathode lead 13b bonded to the cathode tab 13a is exposed outside the pouch case 20. At this time, an insulating tape 30 for ensuring an electrical insulation state while increasing airtightness with the pouch case 20 is attached to the anode lead 11b and the cathode lead 13b that are in contact with the pouch case 20.

In the electrode assembly 10, the anode plates 11 with the extending anode tab 11a and the cathode plates 13 with the extending cathode tab 13a are alternately disposed and the separators 12 are interposed therebetween. At this time, the anode tabs 11a and the cathode tabs 13a are wound in a clockwise direction and connected to the anode lead 11b and the cathode lead 13b. Herein, after the anode tabs 11a and the cathode tabs 13a are wound, a wound section 14 may be wound to be positioned inside a thickness B of the electrode assembly 10.

Accordingly, a space occupied by the anode tabs 11a and the cathode tabs 13a is reduced in an inner space of an airtight section 21 of the pouch case 20, thereby improving spatial utilization. That is, a battery capacity may be improved by increasing the sizes of the anode plate 11 and the cathode plate 13 to be as large as a remaining space of the airtight section 21 and the size of a final product may be reduced by forming the pouch case 20 smaller.

As described above, the pouch case 20 is generally formed on the top and bottom of the aluminum thin-film to have a laminate structure covered with nylon, a synthesic resin such as polypropylene or polyethylene, etc. The inner surface of the pouch case 20 is made of a heat adhesive resin for airtightness. As a result, the heat adhesive resin coated on the inner surface of the pouch case 20 is fused by heating and pressing to make the pouch case 20 airtight.

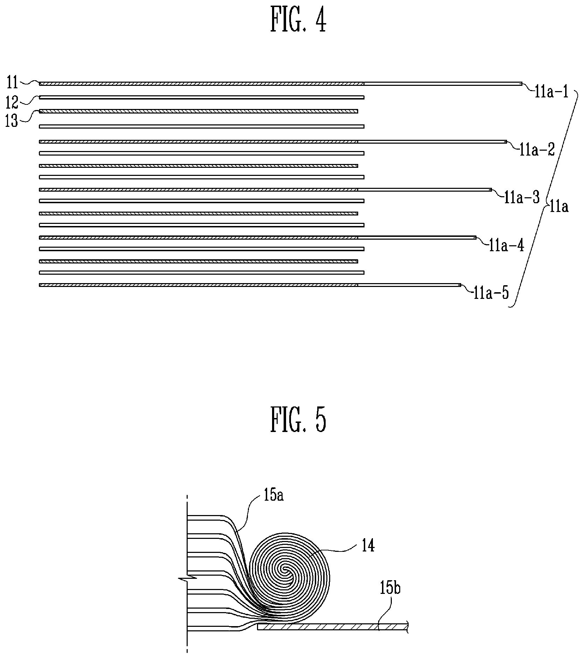

FIG. 4 is a perspective view of an electrode assembly according to a second embodiment of the present invention.

Referring to FIG. 4, draw-out lengths of the anode tabs 11a are different from each other. Herein, when the anode tabs 11a are wound or bent, an anode tab 11a-5 positioned at the innermost side has the shortest length and an anode tab 11a-1 positioned at the outermost side has the longest length. That is, the anode tab 11a-5 positioned at the innermost side and the anode tab 11a-1 positioned at the outermost side and anode tabs 11a-4, 11a-3, and 11a-2 sequentially positioned therebetween have the lengths as 11a-1>11a-2>11a-3>11a-4>11a-5.

Herein, although the cathode tabs 13a drawn out from the cathode plate 13 are not shown, draw-out lengths of the cathode tabs 13a may be different from each other like the anode tabs 11a.

FIG. 5 is a cross-sectional view showing a wound electrode tab and a lead which are bonded to each other according to a third embodiment of the present invention. Referring to FIG. 5, electrode tabs 15a drawn out from an electrode plate (not shown) are wound in a counterclockwise direction and thereafter, a lead 15b is electrically connected to the bottom of the wound section 14. At this time, the lead 15b is, of course, connected with the wound section 14 on the top of the wound section 14. In addition, the wound section 14 and the lead 15b may be connected to each other by welding and the electrode tabs 15a are positioned inside the thickness of the electrode assembly.

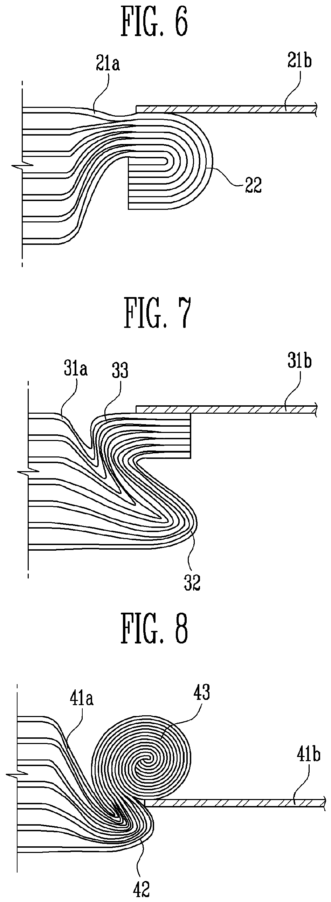

FIG. 6 is a cross-sectional view showing a bent electrode tab and a lead which are bonded to each other.
Referring to FIG. 6, electrode tabs 21a extended from an electrode plate (not shown) are bent once in a half-turn and connected with a lead 21b. Herein, the electrode tabs 21a are bent downward and back on themselves to form a bent section 22. In other words, the tabs 21a are bent so that the ends of the tabs point back towards the electrode assembly. The ends of the tabs 21a may be aligned in a direction that is opposite to the direction in which the tabs emerge from the electrode assembly. In addition, the lead 21b is welded onto the top of the bent electrode tabs 21a.

Although not shown in the figure, the electrode tabs 21a may be bent upwards rather than downwards and the lead 21b may be welded onto the top or the bottom of the electrode tabs 21a. Further, the draw-out lengths of the electrode tabs 21a may be formed to increase from the inside to the outside of a bent portion so that the electrode tabs 21a are easily bent and the electrode tabs 21a may be formed to be positioned inside the width of the electrode assembly.

FIG. 7 is a cross-sectional view showing a bent electrode tab and a lead which are bonded to each other.
Referring to FIG. 7, electrode tabs 31a extended from an electrode plate (not shown) are bent twice and connected with a lead 31b. Herein, the electrode tabs 31a are bent back on themselves to form a first bent section 32 and in addition, they are bent again to form a second bent section 33.

That is, the electrode tabs 31a are bent upwards back towards the electrode assembly to form the first bent section 32 and in addition, they are bent so as to face as the same direction as the direction in which the tabs emerge from the electrode assembly to form the second bent section 33. In other words, the electrode tabs 31a are bent into the form of an S-bend. In addition, the lead 31b is welded onto the top of the electrode tabs 31a which are bent twice. Herein, although not shown in the figure, the lead 31b may be welded onto the bottom of the electrode tabs 31a which are bent twice. The electrode tabs 31a may also be bent more than twice, for example to form a folded, or serpentine, shape.

FIG. 8 is a cross-sectional view showing a bent and wound electrode tab and a lead which are bonded to each other according to a fourth embodiment of the present invention.

Referring to FIG. 8, in the fourth embodiment of the present invention, electrode tabs 41a extended from an electrode plate (not shown) are bent back on themselves once and thereafter, they are wound (in a clockwise direction in the figure) and connected with a lead 41b. Herein, the electrode tabs 41a are bent upwards to form a bent section 42 and wound in the clockwise direction to form a wound section 43. In addition, the lead 41b is welded between the bent section 42 and the wound section 43. Further, the lead 41b may be welded onto the top of the wound section 43.

In addition, although not shown in the figure, the draw-out lengths of the electrode tabs 41a may be formed to increase from the inside to the outside of a bent and wound portion so that the electrode tabs 41a are easily bent and wound and the electrode tabs 41a may be formed to be positioned inside the thickness of the electrode assembly.

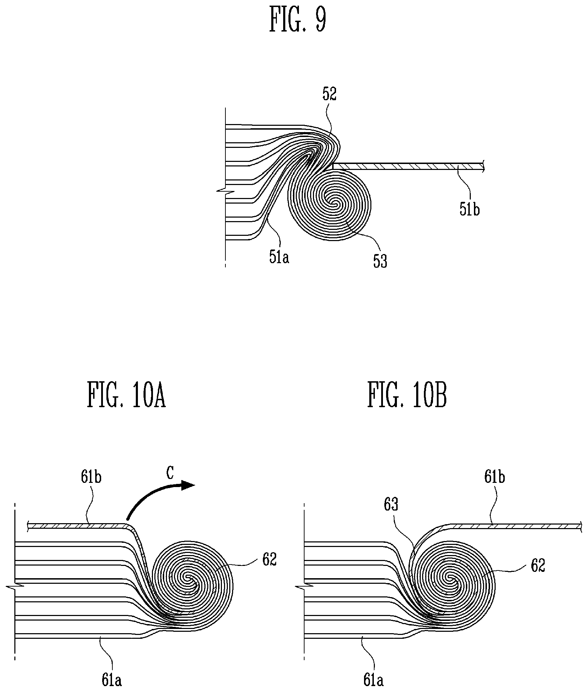

FIG. 9 is a cross-sectional view showing a bent and wound electrode tab and a lead which are bonded to each other according to a fifth embodiment of the present invention.

Referring to FIG. 9, in the fifth embodiment of the present invention, electrode tabs 51a extended from an electrode plate (not shown) are bent back on themselves once and thereafter, they are wound (in a counterclockwise direction in the figure) and connected with a lead 51b. Herein, the electrode tabs 51a are bent downwards to form a bent section 52 and wound in the counterclockwise direction to form a wound section 53. In addition, the lead 51b is welded between the bent section 52 and the wound section 53. Further, the lead 51b may be welded onto the top of the wound section 53.

While not specifically shown, it is envisaged in the above bent and wound embodiments that the tabs may be bent more than once prior to winding.

FIG. 10A is a cross-sectional view showing an electrode tab and a lead which are wound together according to a sixth embodiment of the present invention and FIG. 10B is a cross-sectional view showing a lead which is bent in a direction opposite to an electrode assembly according to the sixth embodiment of the present invention.

Referring to FIGS. 10A and 10B, after a lead 61b is positioned on the top of electrode tabs 61a drawn out from an electrode plate, the lead 61b and the electrode tabs 61a are together wound in the counterclockwise direction to form a wound section 62 so that the lead 61b is positioned at the innermost side. In addition, the end (the end of a lead positioned at the electrode assembly side) of an unwound lead 61b is pulled in a direction (direction C) opposite to the electrode assembly to form a bent section 63 where the end of the unwound lead 61b is bent in the direction opposite to the electrode assembly. Thereafter, a bonding strength is reinforced by welding the electrode tabs 61a and the lead 61b to each other.

According to the sixth embodiment of the present invention, it is possible to improve the utilization of the inner space of the exterior material by winding the electrode tabs 61a and the lead 61b together and it is possible to reduce the number of processes by winding the electrode tabs 61a and the lead 61b together.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. An electrode assembly (10) comprising:
a plurality of first and second electrode plates (11, 13) having separators (12) in between, each of the first and second electrode plates having a tab (11a, 13a, 15a, 41a, 51a, 61a) extending therefrom;
wherein the tabs of at least one of the first electrode plates or the second electrode plates (11) are wound together to form a wound portion (14, 43, 53, 62) having a plurality of windings;
the electrode assembly (10) further comprising an electrode lead (11b, 13b, 15b, 41b, 51b, 61b) connected to an outside surface of the wound portion.

2. The electrode assembly of claim 1, wherein the electrode lead is planar and is disposed on the outside surface of the wound portion parallel to the first and second electrode plates.

3. The electrode assembly of claim 1 or 2, wherein the electrode lead is connected on a side of the wound portion where the plurality of tabs converge.

4. The electrode assembly of claim 1 or 2, wherein the electrode lead is connected on a side of the wound portion opposite to the side where the plurality of tabs converge.

5. The electrode assembly of claim 1, wherein the electrode lead (61b) is wound with the plurality of tabs into the wound portion (62).

6. The electrode assembly of claim 1 or 2, further comprising a bent portion (42, 52) before the wound portion (43, 53), wherein the plurality of tabs (41a, 51a) are bent back on themselves to form the bent portion.

7. The electrode assembly according to claim 6, wherein the electrode lead is connected between the bent portion (42, 52) and the wound portion (43, 53).

8. The electrode assembly of any one of the preceding claims, wherein the electrode lead is attached to an outermost tab extending from an outermost electrode plate, and the outermost tab is bent such that the height of the wound portion with the electrode lead attached does not extend beyond the outermost electrode plate.

9. The electrode assembly of any one of the preceding claims, wherein a length of the extended portion of each successive tab (11a-1 to 11a-5) is shorter than that of the preceding tab.

10. The electrode assembly of claim 9, wherein the tabs (11a, 13a, 15a, 21a, 31a, 41a, 51a, 61a) are wound together such that a first tab on the outermost side is longer than a second tab on an inner side.

11. A secondary battery comprising:
a housing (20); and
an electrode assembly (10) according to any one of the preceding claims in the housing, the electrode assembly including first and second electrode leads extending out of the housing, wherein the wound portion is contained wholly within the housing.

12. The secondary battery of claim 11, comprising an insulating material (30) wound around the electrode leads where the electrode leads emerge from the housing.

## Patentansprüche

1. Elektrodenanordnung (10), umfassend:
eine Mehrzahl von ersten und zweiten Elektrodenplatten (11, 13) mit Separatoren (12) dazwischen, wobei jede der ersten und zweiten Elektrodenplatten eine sich von ihr aus erstreckende Zunge (11a, 13a, 15a, 41a, 51a, 61a) aufweist;
wobei die Zungen mindestens einer der ersten Elektrodenplatten oder der zweiten Elektrodenplatten (11) zusammengewickelt sind, um einen gewickelten Abschnitt (14, 43, 53, 62) mit einer Mehrzahl von Wicklungen zu bilden;
wobei die Elektrodenanordnung (10) ferner einen Elektrodenanschluss (11b, 13b,15b, 41b, 51b, 61b) umfasst, der an eine Außenfläche des gewickelten Abschnitts angeschlossen ist.

2. Elektrodenanordnung nach Anspruch 1, wobei der Elektrodenanschluss planar ist und auf der Außenfläche des gewickelten Abschnitts parallel zu den ersten und zweiten Elektrodenplatten angeordnet ist.

3. Elektrodenanordnung nach Anspruch 1 oder 2, wobei der Elektrodenanschluss auf einer Seite des gewickelten Abschnitts angeschlossen ist, wo die mehreren Zungen zusammenlaufen.

4. Elektrodenanordnung nach Anspruch 1 oder 2, wobei der Elektrodenanschluss auf einer Seite des gewickelten Abschnitts angeschlossen ist, die der Seite gegenüberliegt, wo die mehreren Zungen zusammenlaufen.

5. Elektrodenanordnung nach Anspruch 1, wobei der Elektrodenanschluss (61b) mit der Mehrzahl von Zungen in den gewickelten Abschnitt (62) gewickelt ist.

6. Elektrodenanordnung nach Anspruch 1 oder 2, ferner umfassend einen gebogenen Abschnitt (42, 52) vor dem gewickelten Abschnitt (43, 53), wobei die Mehrzahl von Zungen (41a, 51a) auf sich zurückgebogen ist, um den gebogenen Abschnitt zu bilden.

7. Elektrodenanordnung nach Anspruch 6, wobei der Elektrodenanschluss zwischen dem gebogenen Abschnitt (42, 52) und dem gewickelten Abschnitt (43, 53) angeschlossen ist.

8. Elektrodenanordnung nach einem der vorangehenden Ansprüche, wobei der Elektrodenanschluss an einer äußersten Zunge befestigt ist, die sich von einer äußersten Elektrodenplatte aus erstreckt, und die äußerste Zunge derart gebogen ist, dass die Höhe des gewickelten Abschnitts mit dem befestigten Elektrodenanschluss sich nicht über die äußerste Elektrodenplatte hinaus erstreckt.

9. Elektrodenanordnung nach einem der vorangehenden Ansprüche, wobei eine Länge des verlängerten Abschnitts jeder nachfolgenden Zunge (11a-1 bis 11a-5) kürzer als die der vorhergehenden Zunge ist.

10. Elektrodenanordnung nach Anspruch 9, wobei die Zungen (11a, 13a, 15a, 21a, 31a, 41a, 51a, 61a) derart zusammengewickelt sind, dass eine erste Zunge auf der äußersten Seite länger als eine zweite Zunge auf einer Innenseite ist.

11. Sekundärbatterie, umfassend:
ein Gehäuse (20); und
eine Elektrodenanordnung (10) nach einem der vorangehenden Ansprüche in dem Gehäuse, wobei die Elektrodenanordnung erste und zweite Elektrodenanschlüsse einschließt, die sich aus dem Gehäuse heraus erstrecken, wobei der gewickelte Abschnitt vollständig in dem Gehäuse enthalten ist.

12. Sekundärbatterie nach Anspruch 11, umfassend ein Isoliermaterial (30), das dort um die Elektrodenanschlüsse herumgewickelt ist, wo die Elektrodenanschlüsse aus dem Gehäuse heraustreten.

## Revendications

1. Ensemble d'électrodes (10), comprenant :
une pluralité de premières et deuxièmes plaques d'électrode (11, 13) ayant des séparateurs (12) entre celles-ci, chacune des premières et deuxièmes plaques d'électrode comportant une languette (11a, 13a, 15a, 41a, 51a, 61a) s'étendant à partir de celle-ci ;
dans lequel les languettes d'au moins l'une des premières plaques d'électrode ou des deuxième plaques d'électrode (11) sont enroulées ensemble de façon à former une partie enroulée (14, 43, 53, 62) comportant une pluralité d'enroulements ;
l'ensemble d'électrodes (10) comprenant de plus un conducteur d'électrode (11b, 13b, 15b, 41b, 51b, 61b) connecté à une surface extérieure de la partie enroulée.

2. Ensemble d'électrodes selon la revendication 1, dans lequel le conducteur d'électrode est plan et est disposé sur la surface extérieure de la partie enroulée en parallèle aux premières et deuxièmes plaques d'électrode.

3. Ensemble d'électrodes selon la revendication 1 ou 2, dans lequel le conducteur d'électrode est connecté sur un côté de la partie enroulée où convergent la pluralité de languettes.

4. Ensemble d'électrodes selon la revendication 1 ou 2, dans lequel le conducteur d'électrode est connecté sur un côté de la partie enroulée opposé au côté où convergent la pluralité de languettes.

5. Ensemble d'électrodes selon la revendication 1, dans lequel le conducteur d'électrode (61b) est enroulé avec la pluralité de languettes dans la partie enroulée (62).

6. Ensemble d'électrodes selon la revendication 1 ou 2, comprenant de plus une partie incurvée (42, 52) avant la partie enroulée (43, 53), la pluralité de languettes (41a, 51a) étant réincurvées sur elles-mêmes de façon à former la partie incurvée.

7. Ensemble d'électrodes selon la revendication 6, dans lequel le conducteur d'électrode est connecté entre la partie incurvée (42, 52) et la partie enroulée (43, 53).

8. Ensemble d'électrodes selon l'une quelconque des revendications précédentes, dans lequel le conducteur d'électrode est fixé à une languette située le plus à l'extérieur, s'étendant à partir d'une plaque d'électrode située le plus à l'extérieur, et la languette située le plus à l'extérieur est incurvée de telle sorte que la hauteur de la partie enroulée avec le conducteur d'électrode qui est fixé ne s'étende pas au-delà de la plaque d'électrode située le plus à l'extérieur.

9. Ensemble d'électrodes selon l'une quelconque des revendications précédentes, dans lequel une longueur de la partie étendue de chaque languette successive (11a-1 à 11a-5) est plus courte que celle de la languette précédente.

10. Ensemble d'électrodes selon la revendication 9, dans lequel les languettes (11a, 13a, 15a, 21a, 31a, 41a, 51a, 61a) sont enroulées ensemble de telle sorte qu'une première languette sur le côté situé le plus à l'extérieur soit plus longue qu'une deuxième languette sur un côté intérieur.

11. Batterie secondaire, comprenant :
un boîtier (20) ; et
un ensemble d'électrodes (10) selon l'une quelconque des revendications précédentes dans le boîtier, l'ensemble d'électrodes comprenant des premier et deuxième conducteurs d'électrode s'étendant hors du boîtier, la partie enroulée étant totalement contenue à l'intérieur du boîtier.

12. Batterie secondaire selon la revendication 11, comprenant un matériau isolant (30) enroulé autour des conducteurs d'électrode à l'endroit où les conducteurs d'électrode émergent à partir du boîtier.
